Europäisches Patentamt

European Patent Office

Office européen des brevets

(19)

(11) Numéro de publication : **0 123 753**
**B1**

(12) **FASCICULE DE BREVET EUROPÉEN**

(45) Date de publication du fascicule du brevet :
**05.03.86**

(21) Numéro de dépôt : **83400850.0**

(22) Date de dépôt : **28.04.83**

(51) Int. Cl.⁴ : **C 01 B 33/28**

(54) **Procédé de fabrication de zéolite de type Y.**

(43) Date de publication de la demande :
**07.11.84 Bulletin 84/45**

(45) Mention de la délivrance du brevet :
**05.03.86 Bulletin 86/10**

(84) Etats contractants désignés :
**BE DE GB IT NL SE**

(56) Documents cités :
**FR-A- 1 440 937**
**FR-A- 1 475 167**
**FR-A- 2 376 074**

(73) Titulaire : **RHONE-POULENC SPECIALITES CHIMI-QUES**
**"Les Miroirs" 18, Avenue d'Alsace**
**F-92400 Courbevoie (FR)**

(72) Inventeur : **Latourrette, Bertrand**
**21, Allée Clémencet**
**F-93340 Le Raincy (FR)**
Inventeur : **Poisson, Régis**
**17, avenue de la Cigale**
**F-92600 Asnières (FR)**

(74) Mandataire : **Savina, Jacques et al**
**RHONE-POULENC RECHERCHES Service Brevets**
**Chimie et Polymères 25, quai Paul Doumer**
**F-92408 Courbevoie Cedex (FR)**

Jouve, 18, rue St-Denis, 75001 Paris, France

**0 123 753**

### Description

La présente invention concerne un procédé de fabrication de zéolite de type Y.

La zéolite de type Y est une zéolite cristalline bien connue, elle est de même structure que la faujasite naturelle ou la zéolite de type X mais sa composition chimique est différente. Le brevet américain n° 3 130 007 décrit cette composition caractéristique des zéolites de type Y et donne les valeurs de diffraction des rayons X de ces produits.

On connaît divers procédés de fabrication de zéolites de type Y ; le brevet américain n° 3 130 007 décrit un procédé qui comporte les étapes suivantes :

on prépare un mélange dans des proportions données d'un aluminate de sodium et d'une source de silice prise dans le groupe comportant la silice colloïdale, les gels de silice, l'acide silicique, les silicates de sodium et les silices amorphes,

ce mélange gélifie immédiatement, on opère son mûrissement à température ambiante pendant une durée comprise entre 16 et 40 heures,

on opère ensuite la cristallisation de la zéolite Y, sans agiter pour éviter la formation de zéolites parasites, en portant le mélange à une température d'environ 100 °C,

les cristaux de zéolite Y formés sont enfin séparés de la liqueur mère par filtration, on les lave, puis on les sèche.

Le procédé décrit dans ce brevet américain n° 3 130 007 présente essentiellement l'inconvénient de nécessiter une période de mûrissement longue à température ambiante et des temps de cristallisation également longs. Selon l'exemple 14 de ce brevet, l'opération de mûrissement dure 28 heures et l'opération de cristallisation 48 heures.

Par ailleurs, le brevet français n° 1 475 167 décrit un procédé de fabrication de zéolite Y qui comporte les étapes suivantes :

on opère le mélange d'un composé soluble d'aluminium, d'un composant siliceux ayant un taux d'activité d'au moins 100 unités (dit « silicate actif ») et de silice colloïdale.

Ce mélange gélifie immédiatement et on opère la cristallisation de la zéolite Y par chauffage à une température comprise entre 20 et 120 °C sous agitation.

On sépare, on lave et on sèche les cristaux formés.

Le procédé décrit dans ce brevet français n° 1 475 167 présente essentiellement l'inconvénient de nécessiter la mise en œuvre d'un « silicate actif » très particulier qui en rend son intérêt sur le plan industriel très limité. Il est en effet nécessaire, pour mettre en œuvre ce procédé, de vérifier préalablement « l'activité » du silicate.

La demanderesse a mis au point un procédé de fabrication de zéolite de type Y qui remédie aux inconvénients présentés par les procédés de l'art antérieur et qui permet notamment d'obtenir des zéolites Y pures en évitant des étapes trop longues et en partant de matières premières courantes et facilement accessibles industriellement.

La présente invention concerne en effet un procédé de fabrication de zéolite de type Y caractérisé en ce qu'il comporte les étapes suivantes :

1) on opère à température ambiante le mélange d'une solution aqueuse d'un composé soluble d'aluminium et d'une solution aqueuse de silicate de sodium de façon à obtenir une solution ou un sol,

2) on opère un transfert de calories pour porter le mélange à l'état de sol ou de solution de la température ambiante à la température de cristallisation qui est comprise entre 50 et 120 °C.

3) on opère ensuite la cristallisation de la zéolite Y par chauffage du mélange obtenu à une température comprise entre 50 et 120 °C.

La zéolite Y ainsi obtenue est cristallisée à 100 %, c'est-à-dire qu'elle est entièrement pure.

Selon la première étape du procédé de l'invention, on opère à température ambiante le mélange d'une solution aqueuse d'un composé soluble d'aluminium et d'une solution de silicate de sodium de façon à obtenir une solution ou un sol.

On entend par sol un système colloïdal dont le milieu de dispersion est un liquide et la phase dispersée un solide. Le sol s'entend au sens de l'invention par opposition au gel qui est une masse viscoélastique formée à partir de certaines suspensions colloïdales.

Le sol ou la solution selon l'invention peuvent être obtenus soit par mélange en continu des réactifs, soit par mélange rapide des réactifs sous agitation violente. Le mélange doit être fait de façon à éviter la gélification de celui-ci, autrement dit le temps de mélange doit être inférieur au temps à partir duquel le mélange commence à gélifier. Ce temps de « gélification » dépend notamment de la composition chimique du mélange réactionnel, de la nature des réactifs et de la température.

La solution aqueuse du composé soluble de l'aluminium mise en œuvre selon l'invention peut être une solution d'aluminate de sodium ou une solution d'un sel d'aluminium soluble dans l'eau comme, par exemple, une solution de sulfate, de chlorure, de nitrate d'aluminium ou de silicate d'aluminium.

On utilise de préférence l'aluminate de sodium car il limite la tendance à l'introduction d'ions étrangers dans le réseau de la zéolite.

La solution de silicate de sodium mise en œuvre selon l'invention est obtenue par dissolution de métasilicate de sodium hydraté dans une solution de silicate de sodium du commerce. Le métasilicate de sodium hydraté utilisé de préférence est un produit du commerce qui peut-être penta- ou nona-hydraté, il

2

présente la formule $Na_2SiO_3, 5H_2O$ ou $Na_2SiO_3, 9H_2O$. La solution de silicate de sodium utilisée de préférence est une solution du commerce ; on peut, par exemple, mettre en œuvre des solutions de silicates de sodium vendues par la Société Rhône-Poulenc et présentant les compositions pondérales suivantes :

| : % $SiO_2$ : | 22,7 | : | 25,8 | : | 27,7 | : | 28,5 | : | 26,6 | : | 30,6 | : |
|---|---|---|---|---|---|---|---|---|---|---|---|---|
| : % $Na_2O$ : | 5,7 | : | 7,7 | : | 8,3 | : | 8,9 | : | 13,1 | : | 15,0 | : |
| : % $H_2O$ : | 71,4 | : | 66,3 | : | 63,7 | : | 62,1 | : | 60,0 | : | 53,6 | : |

La proportion entre le silicate de sodium du commerce et le métasilicate peut varier dans de larges proportions ainsi de 1 à 100 % en poids de la silice totale peut être introduite sous forme de métasilicate hydraté. On préfère mettre en œuvre 2 à 60 % de métasilicate hydraté et plus particulièrement 5 à 15 %.

Selon une variante du procédé de l'invention, la solution de silicate de sodium peut également contenir de l'eau et de la soude supplémentaire que l'on a introduit soit dans la solution de silicate de sodium du commerce, soit dans la solution de métasilicate, soit dans le mélange des deux.

La solution du composé soluble de l'aluminium et la solution de silicate de sodium sont mélangées dans des proportions telles que le rapport molaire des oxydes dans le mélange est tel que :

$SiO_2/Al_2O_3$ est compris entre 5 et 40

$Na_2O/SiO_2$ est compris entre 0,2 et 2

$H_2O/Na_2O$ est compris entre 12 et 200.

Dans le cas où l'on met en œuvre un sel soluble d'aluminium dans l'eau, le rapport molaire $Na_2O/SiO_2$ indiqué ci-dessus ne comprend pas le $Na_2O$ qui sera utilisé pour l'obtention d'un sol neutre avec l'anion dégagé au cours de la réaction, par exemple le sulfate donnant le sulfate de sodium, le chlorure donnant le chlorure de sodium, etc...

L'ordre dans lequel on mélange les réactifs pour obtenir le sol ou la solution n'est pas critique, toutefois on préfère pour obtenir une zéolite Y de plus grande pureté introduire la solution du composé d'aluminium dans la solution de silicate de sodium sous agitation violente. Des dispositifs tels que la boîte à mélange, la turbine, un mélangeur statique pour réaliser ce mélange peuvent convenir.

Selon un mode de mise en œuvre préféré du procédé de l'invention, on opère le mélange des réactifs en continu dans un réacteur tubulaire, le temps de séjour étant inférieur au temps de gélification et généralement inférieur à 1 minute.

Selon la deuxième étape du procédé de l'invention, on opère un transfert de calories très rapide pour porter le mélange à l'état de sol ou de solution de la température ambiante à la température de cristallisation qui est comprise entre 50 et 120 °C. Ce transfert de calories peut être réalisé par tout moyen et, en particulier, par mise en contact du sol ou de la solution avec de la vapeur d'eau sous pression ou par passage du sol ou de la solution dans un fluide caloporteur tel que le pétrole chaud. On opère de préférence ce transfert de calories en continu en moins d'une minute et de préférence en moins d'une seconde par mise en contact du sol ou de la solution obtenu par mélange des réactifs en continu avec la vapeur d'eau sous pression. Durant le transfert de calories qui est très rapide, il ne se produit pas de changement d'état pour le sol ou la solution, lorsque celui-ci est effectué, le sol ou la solution se transformant immédiatement en gel.

Selon la troisième étape du procédé de l'invention, on opère ensuite la cristallisation de la zéolite Y par chauffage du gel obtenu à une température comprise entre 50 et 120 °C et de préférence entre 90 et 105 °C. Ce chauffage du gel peut être court ou long, il doit permettre l'obtention de zéolite Y totalement cristallisée et très pure, c'est-à-dire ne contenant pas ou peu de matière amorphe ni d'autres phases cristallisées. L'homme de l'art sait déterminer le temps de la réaction de cristallisation optimum qui est notamment déterminé par les rapports et les concentrations du mélange réactif initial, les caractéristiques de l'appareillage dans lequel est mis en œuvre le procédé, la température de réaction. Généralement la durée optimum de la réaction de cristallisation varie entre environ 2 heures et environ 48 heures. Cette très courte durée est un des avantages du procédé de l'invention, la durée étant d'autant plus courte que le rapport molaire silice/alumine de la zéolite Y obtenu est faible. Cette étape de cristallisation peut être mise en œuvre par tout moyen connu et en particulier dans un réacteur à double enveloppe agité ou non. Lorsque l'on opère une agitation, celle-ci ne doit intervenir qu'après environ une heure de cristallisation.

Le procédé de la présente invention ne nécessite pas de mettre en œuvre une étape de vieillissement, ceci constitue un avantage important de ce procédé.

Le procédé selon la présente invention permet d'obtenir les divers types de zéolite Y de rapport molaire silice/alumine compris entre 3 et 6.

Il est particulièrement adapté à la fabrication de zéolite Y présentant un rapport molaire $SiO_2/Al_2O_3$ supérieur à 4,5.

3

**0 123 753**

Ainsi qu'il est bien connu de l'homme de l'art, la zéolite Y obtenue est généralement ensuite séparée de la liqueur mère par filtration, elle est ensuite lavée à l'eau distillée de façon à ce que le pH des effluents des eaux de lavage soit d'environ 10,5. La poudre résultante peut être ensuite échangée, séchée, calcinée, mise en forme, etc...

Les zéolites Y obtenues selon le procédé de l'invention présentent le diagrame de diffraction X caractéristique des zéolites Y, elles sont d'une grande pureté.

Elles peuvent être utilisées dans toutes les applications mettant notamment en œuvre leurs qualités dans les domaines de l'adsorption et de la catalyse.

Les exemples qui suivent illustrent l'invention sans en limiter la portée.

### Exemple 1

On opère à température ambiante le mélange d'une solution aqueuse d'un composé soluble d'aluminium et d'une solution de silicate de sodium.

La solution aqueuse d'un composé soluble d'aluminium est constituée par une solution d'aluminate de sodium de composition molaire 1,25 $Na_2O$, 1$Al_2O_3$, 112 $H_2O$.

La solution de silicate de sodium mise en œuvre est obtenue par dissolution de métasilicate de sodium pentahydraté $Na_2SiO_3$ 5$H_2O$ dans une solution aqueuse de silicate de sodium de composition pondérale 28,3 % $SiO_2$, 8,2 % $NaO_2$, 63,5 % $H_2O$ et d'eau. Cette solution de composition molaire 5,29 $Na_2O$, 15 $SiO_2$, 188 $H_2O$ comporte 10 % de la silice totale sous forme de métasilicate pentahydraté.

Les solutions aqueuses d'aluminate de sodium et de silicate de sodium sont introduites à 20 °C avec des débits de 55 l/h, respectivement 102 l/h dans un mélangeur statique. Le temps de séjour dans le mélangeur est de 0,5 seconde. Le mélange à l'état de solution est caractérisé par les rapports molaires suivants :

$SiO_2/Al_2O_3 = 15$
$Na_2O/SiO_2 = 0,437$
$H_2O/Na_2O = 45,8$

Le transfert de calories pour porter le mélange à l'état de solution de 20 °C à 94 °C a été obtenu en continu, à l'aide d'un éjecteur vapeur en mettant en contact le mélange et de la vapeur sous pression à des débits de 157 l/h de mélange et 26 kg de vapeur par heure, avec un temps de contact d'environ 1 seconde. A la sortie de l'éjecteur vapeur, on obtient une solution qui gélifie instantanément.

La cristallisation du gel obtenu est effectuée dans un réacteur à double enveloppe non agité à 100 °C pendant 8 heures. Le solide qui décante est filtré puis lavé à l'eau distillée, de façon à ce que le pH des eaux de lavage soit d'environ 10,5.

Le produit solide obtenu après filtration et lavage, est une zéolite Y cristallisée à 100 %, caractérisée par un rapport molaire $SiO_2/Al_2O_3 = 4,8$.

### Exemple 2

On opère à température ambiante le mélange d'une solution aqueuse d'un composé soluble d'aluminium et d'une solution de silicate de sodium.

La solution aqueuse d'un composé soluble d'aluminium est constituée par une solution d'aluminate de sodium de composition molaire 1,6 $Na_2O$, 1 $Al_2O_3$, 113 $H_2O$.

La solution de silicate de sodium mise en œuvre est obtenue par dissolution de métasilicate de sodium pentahydraté $Na_2SiO_3$ 5$H_2O$ dans une solution aqueuse de silicate de sodium de composition pondérale 28,3 % $SiO_2$, 8,2 % $Na_2O$, 63,5 % $H_2O$ d'eau et de soude. Cette solution de composition molaire 4,4 $Na_2O$, 10 $SiO_2$, 187 $H_2O$ comporte 10 % de la silice totale sous forme de métasilicate.

Les solutions aqueuses d'aluminate de sodium et de silicate de sodium sont introduites en continu à 20 °C dans un mélangeur statique avec un temps de contact de 1 seconde dans des proportions telles que l'on ait dans la solution obtenue les rapports molaires suivants :

$SiO_2/Al_2O_3 = 10$
$Na_2O/SiO_2 = 6$
$H_2O/Na_2O = 50$

Le transfert de calories pour porter le mélange à l'état de solution de 20 °C à 100 °C est effectué en continu par mise en contact du mélange avec de la vapeur d'eau sous pression dans un éjecteur à vapeur avec un temps de contact de 1 seconde.

La cristallisation du gel obtenu est effectuée dans un réacteur à double enveloppe non agité à 100 °C pendant 4 h. Le solide qui décante est filtré puis lavé à l'eau distillée, de façon à ce que le pH des eaux de lavage soit d'environ 10,5.

Le produit solide obtenu après filtration et lavage est une zéolite Y cristallisée à 100 %, caractérisée par un rapport molaire $SiO_2/Al_2O_3 = 3,8$.

### Exemple 3

On opère à température ambiante le mélange d'une solution aqueuse d'un composé soluble d'aluminium et d'un sol de silicate de sodium.

4

La solution aqueuse d'un composé soluble d'aluminium est constituée par une solution d'aluminate de sodium de composition molaire 1,4 $Na_2O$, 1 $Al_2O_3$, 77 $H_2O$.

Le sol de silicate de sodium mis en œuvre est obtenu par dissolution de métasilicate de sodium dans un silicate de sodium de composition pondérale 28,3 % $SiO_2$, 8,2 % $Na_2O$, 63,5 % $H_2O$. Ce sol de composition molaire 3,6 $Na_2O$, 10 $SiO_2$, 73 $H_2O$ comporte 10 % de la silice totale sous forme de métasilicate pentahydraté.

L'aluminate de sodium et le silicate de sodium sont introduits à 20 °C dans un mélangeur statique avec un temps de contact de 0,3 seconde dans des proportions telles que dans le sol obtenu, l'on ait les rapports molaires suivants :

$SiO_2/Al_2O_3 = 10$

$Na_2/SiO_2 = 0,5$

$H_2O/Na_2O = 30$

Le transfert de calories pour porter le mélange à l'état de sol de 20 °C à 10 °C a été obtenu en continu à l'aide d'un éjecteur vapeur par mise en contact pendant 1 seconde du mélange et de vapeur d'eau sous pression. A la sortie de l'éjecteur vapeur, on observe une gélification instantanée.

La cristallisation du gel obtenu est effectuée dans un réacteur à double enveloppe non agitée à 100 °C pendant 2 h. Le solide qui décante est filtré puis lavé à l'eau distillée, de façon à ce que le pH des eaux de lavage soit d'environ 10,5.

Le produit solide obtenu après filtration et lavage est une zéolite Y cristallisée à 100 %, caractérisée par un rapport molaire $SiO_2/Al_2O_3 = 4$.

Exemple 4

On a reproduit le procédé décrit à l'exemple 1 en faisant varier la composition du mélange des réactifs mis en œuvre.

Le Tableau 1 ci-après présente les essais réalisés en indiquant les caractéristiques des réactifs et du mélange obtenu. Il présente également les temps de cristallisation à 100 °C obtenus et le rapport silice/alumine de la zéolite Y obtenue.

(Voir Tableau 1  p. 6)

Tableau 1

| Essais n° | Composé soluble d'aluminium Na₂O Al₂O₃ H₂O | Silicate de sodium Na₂O SiO₂ H₂O | SiO₂ métasilicate / SiO₂ total | Mélange SiO₂/AI₂O₃ Na₂O/SiO₂ H₂O/Na₂O | Temps de cristil- lisation | Y SiO₂/AI₂O₃ |
|---|---|---|---|---|---|---|
| 1 | 1,25  1  112 | 5,29  15  188 | 0,05 | 15  0,44  46 | 18 h | 4,8 |
| 2 | 1,25  1  112 | 6,45  15  188 | 0,20 | 15  0,51  42 | 4 h | 4,0 |
| 3 | Al(NO₃)₃ | 6,20  8  188 | 0,10 | 8  0,40  94 | 8 h | 4,4 |
| 4 | Al(NO₃)₃ | 4,85  6 | 0,10 | 6  0,31  98 | 8 h | 4,8 |
| 5 | 2  1  112 | 4  8  188 | 0,10 | 8  0,75  50 | 2 h | 3,6 |
| 6 | 1,3  1  250 | 3,7  10  350 | 0,10 | 10  0,5  140 | 10 h | 4,8 |
| 7 | Al(NO₃)₃ | 7  10  350 | 0,10 | 10  0,4  150 | 12 h | 5,0 |
| 8 | Al(NO₃)₃ | 8  10  188 | 0,10 | 10  0,5  60 | 6 h | 4,2 |
| 9 | Al(NO₃)₃ | 5,1  5  200 | 0,10 | 5  0,42  157 | 4 h | 3,8 |
| 10 | 1,5  1  112 | 4,9  15  188 | 0,01 | 15  0,43  47 | 9 h | 4,8 |
| 11 | Al (NO₃)₃ | 7  10  188 | 0,10 | 10  0,4  75 | 8 h | 4,8 |
| 12 | Al₂(SO₄)₃ | 7  10  188 | 0,10 | 10  0,4  75 | 8 h | 4,8 |

**Revendications**

1. Procédé de fabrication de zéolite de type Y caractérisé en ce qu'il comporte les étapes suivantes :

1) on opère à température ambiante le mélange d'une solution aqueuse d'un composé soluble d'aluminium et d'une solution aqueuse de silicate de sodium de façon à obtenir une solution ou un sol.

2) on opère un transfert de calories pour porter le mélange à l'état de sol ou de solution de la température ambiante à la température de cristallisation qui est comprise entre 50 et 120 °C.

3) on opère ensuite la cristallisation de la zéolite Y par chauffage du mélange obtenu à une température comprise entre 50 et 120 °C.

2. Procédé selon la revendication 1 caractérisé en ce que la solution ou le sol de la première étape sont obtenus, soit par mélange en continu des réactifs, soit par mélange rapide des réactifs sous agitation violente.

3. Procédé selon la revendication 1 caractérisé en ce que la solution de silicate de sodium a été fabriquée par dissolution de métasilicate de sodium hydraté dans une solution de silicate de sodium du commerce.

4. Procédé selon la revendication 3 caractérisé en ce que la proportion de métasilicate de sodium hydraté dans la solution de silicate de sodium est telle que de 1 à 100 % en poids de la silice totale de la solution de silicate de sodium provient du métasilicate de sodium hydraté.

5. Procédé selon la revendication 4 caractérisé en ce que de 2 à 60 % et de préférence de 5 à 15 % en poids de la silice totale de la solution de silicate de sodium provient du métasilicate de sodium hydraté.

6. Procédé selon la revendication 1 caractérisé en ce que le mélange de la solution aqueuse du composé soluble d'aluminium et de la solution aqueuse de silicate de sodium présente un rapport molaire des oxydes dans les proportions suivantes :

$SiO_2/Al_2O_3$ compris entre 5 et 40

$Na_2O/SiO_2$ compris entre 0,2 et 2

$H_2O/Na_2O$ compris entre 12 et 200.

7. Procédé selon la revendication 1 caractérisé en ce que le transfert de calories est opéré en continu en moins d'une minute et de préférence en moins d'une seconde par mise en contact de la solution ou du sol avec de la vapeur d'eau sous pression.

8. Procédé selon la revendication 1 caractérisé en ce que la cristallisation est opérée à une température comprise entre 90 et 105 °C pendant un temps compris entre 2 et 48 heures dans un réacteur à double enveloppe.

**Claims**

1. Process for manufacturing type Y zeolite, characterised in that it incorporates the following stages :

1) an aqueous solution of a soluble aluminium compound and an aqueous sodium silicate solution are mixed at room temperature so as to obtain a solution or a sol ;

2) a heat-transfer operation is performed to bring the mixture, which is in the sol or solution state at room temperature, to the crystallisation temperature which is between 50 and 120 °C ;

3) crystallisation of the zeolite Y is performed by heating the mixture obtained to a temperature between 50 and 120 °C.

2. Process according to Claim 1, characterised in that the solution or sol of the first stage are obtained either by continuous mixing of the reagents or by rapid mixing of the reagents with vigorous stirring.

3. Process according to Claim 1, characterised in that the sodium silicate solution has been manufactured by dissolving hydrated sodium metasilicate in a commercial sodium silicate solution.

4. Process according to Claim 3, characterised in that the proportion of hydrated sodium metasilicate in the sodium silicate solution is such that from 1 to 100 % by weight of the total silica in the sodium silicate solution originates from the hydrated sodium metasilicate.

5. Process according to Claim 4, characterised in that from 2 to 60 %, and preferably from 5 to 15 % by weight of the total silica in the sodium silicate solution originates from the hydrated sodium metasilicate.

6. Process according to Claim 1, characterised in that the mixture of the aqueous solution of the soluble aluminium compound and the aqueous sodium silicate solution possesses a mole ratio of the oxides in the following proportions :

$SiO_2/Al_2O_3$ between 5 and 40

$Na_2O/SiO_2$ between 0,2 and 2

$H_2O/Na_2O$ between 12 and 200.

7. Process according to Claim 1, characterized in that the heat transfer operation is performed continuously in less than one minute, and preferably in less than one second, by bringing the solution or sol into contact with steam under pressure.

8. Process according to Claim 2, characterized in that the crystallization is performed at a temperature between 90 and 105 °C, for a period of between 2 and 48 hours, in a double-walled reactor.

# 0 123 753

**Patentansprüche**

1. Verfahren zur Herstellung eines Zeoliths des Y-Typs, dadurch gekennzeichnet, daß es folgende Stufen umfasst :

1) man stellt bei Umgebungstemperatur eine Mischung einer wässrigen Lösung einer löslichen Aluminiumverbindung und einer wässrigen Lösung von Natriumsililkat in der Weise her, daß man eine Lösung oder ein Sol erhält,

2) man führt Wärme zu, um die im Sol- oder Lösungszustand bei Umgebungstemperatur befindliche Mischung auf die Kristallisationstemperatur zu bringen, die zwischen 50 und 120 °C liegt,

3) man führt anschließend die Kristallisation des Y-Zeolithen durch Erwärmung der erhaltenen Mischung auf eine Temperatur zwischen 50 und 120 °C durch.

2. Verfahren nach Anspruch 1, dadurch gekennzeichnet, daß die Lösung oder das Sol der ersten Stufe entweder durch kontinuierliche Mischung der Reaktionspartner oder durch rasche Mischung der Reaktionspartner unter heftigem Rühren erhalten werden.

3. Verfahren nach Anspruch 1, dadurch gekennzeichnet, daß die Lösung von Natriumsilikat durch Auflösen von hydratisiertem Natriummetasilikat in einer Lösung von handelsüblichem Natriumsilikat hergestellt wird.

4. Verfahren nach Anspruch 3, dadurch gekennzeichnet, daß der Anteil an hydratisiertem Natriummetasilikat in der Natriumsilikatlösung derart ist, daß zwischen 1 und 100 Gew.% des gesamten Siliciums der Lösung von Natriumsilikat aus dem hydratisierten Natriummetasilikat stammen.

5. Verfahren nach Anspruch 4, dadurch gekennzeichnet, daß zwischen 2 und 60 Gew.%, vorzugsweise zwischen 5 und 15 Gew.% des gesamten Siliciums der Natriumsilikatlösung aus dem hydratisierten Natriummetasilikat stammen.

6. Verfahren nach Anspruch 1, dadurch gekennzeichnet, daß die Mischung der wässrigen Lösung der löslichen Aluminiumverbindung und der wässrigen Lösung des Natriumsilikats die folgenden molaren Verhältnisse der Oxide aufweist :

$SiO_2/Al_2O_3$ zwischen 5 und 40

$Na_2O/SiO_2$ zwischen 0,2 und 2

$H_2O/Na_2O$ zwischen 12 und 200.

7. Verfahren nach Anspruch 1, dadurch gekennzeichnet, daß die Wärmezufuhr kontinuierlich in weniger als 1 min, vorzugsweise weniger als 1 sec, erfolgt, indem die Lösung oder das Sol mit Wasserdampf unter Druck in Kontakt gebracht wird.

8. Verfahren nach Anspruch 1, dadurch gekennzeichnet, daß die Kristallisation bei einer Temperatur zwischen 90 und 105 °C während einer Zeit zwischen 2 und 48 h in einem Doppelwandreaktor durchgeführt wird.